Europäisches Patentamt

European Patent Office

Office européen des brevets

(19)

(11) Veröffentlichungsnummer : **0 090 157
B1**

(12) **EUROPÄISCHE PATENTSCHRIFT**

(45) Veröffentlichungstag der Patentschrift :
18.06.86

(21) Anmeldenummer : 83101314.9

(22) Anmeldetag : 11.02.83

(51) Int. Cl.⁴ : **B 60 J   3/02**

(54) **Lager für Sonnenblendenkörper.**

(30) Priorität : 27.03.82 DE 8208831 U

(43) Veröffentlichungstag der Anmeldung :
05.10.83 Patentblatt 83/40

(45) Bekanntmachung des Hinweises auf die Patenterteilung : 18.06.86 Patentblatt 86/25

(84) Benannte Vertragsstaaten :
DE FR GB IT SE

(56) Entgegenhaltungen :
EP-A- 0 057 811
DE-B- 2 551 633
DE-U- 8 001 557

(73) Patentinhaber : Gebr. Happich GmbH
Postfach 10 02 49 Clausenbrücke 1
D-5600 Wuppertal 1 (DE)
FR GB IT SE
Firma A. Raymond
Teichstrasse 57
D-7850 Lörrach (DE)
DE

(72) Erfinder : Kuttler, Otto
Georg-Feuerstein-Strasse 10
D-6980 Wertheim (DE)
Erfinder : Mack, Gerhard
Juchstrasse 19
D-7888 Rheinfelden-Adelhausen (DE)

## Beschreibung

Die Erfindung geht aus von dem im Oberbegriff des Anspruchs 1 angegebenen und beispielsweise durch DE-B-25 51 633 bekannten Lager für Sonnenblendenkörper.

Bei diesem Lager ist die zum Lagerkörper hin abgewinkelte Verlängerung des Klemmschenkels als V-förmige Feder ausgebildet, deren Umkehrung zum gegenüberliegenden Schenkel gerichtet ist. Das bedeutet, daß die Verlängerung zunächst dicht unter dem Lagerkörper auf den gegenüberliegenden Schenkel hin geführt, kurz vor diesem herumgebogen und dann wieder mit Abstand zum ersten Verlängerungsteil bis zur Verhakungskante zurückgeführt ist.

Dadurch ergibt sich ein relativ großer Abstand zwischen dem unteren Rand des Lagerkörpers und der Verhakungsstelle. Wird nun der Lagerkörper um die Lagerachse geschwenkt, so wird die U-förmige Klemmfeder durch den Übergang von der abgeflachten Stelle der Lagerachse auf die runde Oberfläche auseinandergebogen und die Klemmschenkel, die vorher eng an dem Lagerkörper anlagen, heben sich nun von diesem etwas ab, so daß sich der Lagerkörper in dem vergrößerten Raum zwischen den beiden Klemmschenkeln leicht hin- und herbewegen kann. Wird die Sonnenblende wieder in ihre Einraststellung geklappt, so schlagen die Federschenkel gegen der Lagerkörper, was mit einer unerwünschten Geräuschbildung verbunden ist.

Aufgabe der Errfindung ist es, das Klemmlager dahingehend zu verbessern, daß die Spaltbildung beim Schwenken des Sonnenblendkörpers und die damit einhergehende Geräuschbelästigung vermieden wird.

Dies wird bei dem vorliegenden Klemmlager erfindungsgemäß dadurch erreicht, daß die Kante in der Ebene der Abwinkelung der zweiten Verlängerung etwa im Bereich ihrer Biegekante angeordnet ist, wobei die Abwinkelung im Abstand vor dem gegenüberliegenden Schenkel endet und soweit bis unter den Schwenkbogen « S » des gegenüberliegenden Hakens geneigt ist, daß die Abwinkelung für diesen als Auflaufschräge zum Einleiten des Hintergreifens dient.

Durch die vorgenannte Änderung der Verhakungsausbildung kann die Verhakungsstelle unmittelbar unterhalb des Lagerkörpers angeordnet werden, so daß beim Auseinanderbiegen der Klemmfeder an der Lagerachse der untere Bereich der Klemmfeder sich praktisch nicht vom Lagerkörper abhebt. Ein weiterer Vorteil besteht darin, daß durch die Verkürzung der abgewinkelten Schenkelverlängerung Bandmaterial eingespart wird, was sich günstig auf die Herstellungskosten auswirkt.

Die Verhakungskante kann grundsätzlich durch die Biegekante zwischen Klemmschenkel und abgewinkelter Verlängerung gebildet sein, wobei zum sicheren Hintergreifen ein möglichst scharfer Knick erforderlich ist. Noch besser ist es jedoch, wenn nach einem weiteren Merkmal der Erfindung die Verhakungskante durch ein in der Schenkelverlängerung eingeschnittenes Fenster gebildet ist, in welches der Haken des gegenüberliegenden Schenkels eingreift. Hierbei kann der Haken in dem Fenster soweit versenkt werden, daß er mit der Ebene des Klemmschenkels abschließt.

In der Zeichnung ist ein Ausführungsbeispiel der Erfindung dargestellt.

Es zeigt :

Figur 1  eine Klemmfeder in Seitenansicht,

Figur 2  die Klemmfeder in der Ansicht « A »,

Figur 3  eine Ansicht auf dem abgewinkelten Rasthaken in Richtung « B »,

Figur 4  eine Teilansicht des Sonnenblendenlagers mit eingebauter Klemmfeder und

Figur 5  einen Schnitt durch das Lager gemäß Linie V-V in Fig. 4.

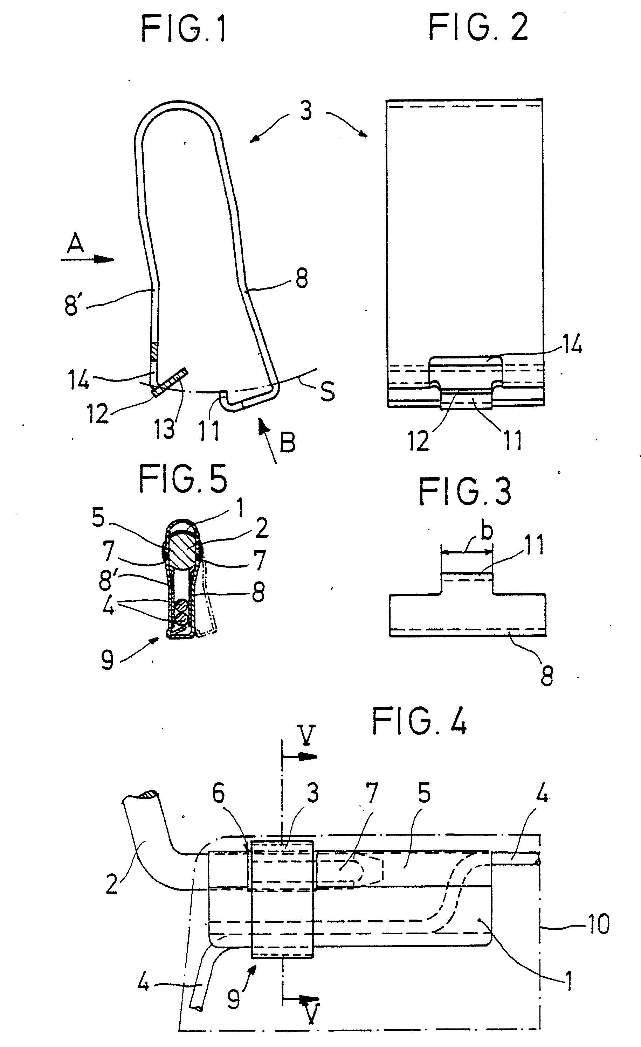

Bei dem in den Fig. 4 und 5 dargestellten Lager für Sonnenblendenkörper ist ein im Querschnitt etwa U-förmig ausgebildeter Lagerkörper 1 auf einer Lagerachse 2 schwenkbar gelagert. Der Lagerkörper 1 ist seinerseits an Verstärkungsdrähten 4 angeschweißt, welche einem in der Zeichnung strichpunktiert angedeuteten Sonnenblendenkörper 10 die nötige Steifigkeit verleihen. Im Bereich der Aufnahme 5 der Lagerachse 2 ist der Lagerkörper 1 in seinem Querschnitt entsprechend dem Durchmesser der Lagerachse 2 erweitert. Auf jeder Seite des Lagerkörpers 1 sind im Bereich der Lageraufnahme 5 deckungsgleiche Aussparungen 6 vorgesehen, in denen die Lagerachse 2 mit zueinander parallelen Abflachungen 7 offenliegt.

Der Lagerkörper 1 wird im Bereich der Aussparungen 6 von einer U-förmigen Klemmfeder 3 übergriffen und zwar derart, daß ein flächiger und federbeaufschlagter Kontakt mit den Abflachungen 7 erreicht wird. Im Endbereich der beiden Schenkel 8, 8' der U-förmigen Klemmfeder 3 ist eine aus Verlängerungen der Schenkel aufgebaute, generell mit 9 bezeichnete Verhakungsausbildung angeformt, die anhand der Fig. 1 bis 3 nachfolgend erläutert werden soll.

Der eine, in der Fig. 1 rechts dargestellte Schenkel 8 ist zur Bildung eines Hakens 11 zweimal etwa rechtwinklig zum Lagerkörper 1 hin abgewinkelt, wobei der aus der letzten Abwinkelung gebildete Haken 11 nur kurz ausgebildet ist. Dieser Haken 11 hintergreift in Gebrauchsstellung, d. h. im eingebauten Zustand der Klemmfeder 3 eine Kante 12, die an eine ebenfalls zum Lagerkörper 1 hin abgewinkelte Verlängerung 13 des linken Klammerschenkels 8' etwa im Bereich der Biegekante angeordnet ist. Diese Verlängerung 13 endet im Abstand vor dem gegenüberliegenden Schenkel 8' und ist derart zum Schwenkbogen « S » des gegenüberliegenden Hakens 11 geneigt, daß die Verlängerung 13 für diesen Haken 11 als Auflaufschräge dient.

Die Verhakungskante 12 kann zwar grundsätzlich durch die Biegekante zwischen Klemmschenkel 8' und abgewinkelter Verlängerung 13 gebildet sein. Wegen des einzuhaltenden Biegeradius muß dann aber der Haken 11 so weit hochgezogen sein, daß er über die Rundung der Biegekante reicht. Um den Haken 11 so kurz wie möglich zu halten, ist daher am unteren Ende des Klemmschenkels 8' ein Fenster eingeschnitten, dem der Haken 11, wie aus Fig. 3 ersichtlich, in seiner Breite « b » derart angepaßt ist, daß dieser Haken 11 in das Fenster 14 eingreift. Die Verhakungskante 12 wird hierbei durch die unterste Fensterseite gebildet, welche in der Ebene der abgewinkelten Verlängerung 13 liegt.

### Patentansprüche

1. Lager für einen Sonnenblendenkörper, insbesondere für Fahrzeugsonnenblenden, mit einem flachen Lagerkörper (1) und einer Lagerachse (2) mit einer von einer U-förmigen Klemmfeder (3) beaufschlagten Abflachung (7), wobei die freien Enden der Feder (3) eine Verhakungsausbildung (9) aufweisen, die aus Verlängerungen der Schenkel (8, 8') aufgebaut ist, von denen die erste Verlängerung als ein zweimal zum Lagerkörper (1) hin abgewinkelter Haken (11) ausgebildet ist, während die zweite ebenfalls zum Lagerkörper (1) hin abgewinkelte Verlängerung (8') unterhalb des Lagerkörpers (1) eine Kante (12) aufweist, welche den nach innen abgewinkelten Haken (11) in Gebrauchsstellung hintergreift, dadurch gekennzeichnet, daß die Kante (12) in der Ebene der Abwinkelung (13) der zweiten Verlängerung etwa im Bereich ihrer Biegekante angeordnet ist, wobei die Abwinkelung (13) mit Abstand vor dem gegenüberliegenden Schenkel (8) endet und so weit bis unter den Schwenkbogen « S » des gegenüberliegenden Hakens (11) geneigt ist, daß die Abwinkelung (13) für diesen als Auflaufschräge zum Einleiten des Hintergreifens dient.

2. Lager nach Anspruch 1, dadurch gekennzeichnet, daß die Verhakungskante (12) durch ein in der Schenkelverlängerung (13) eingeschnittenes Fenster (14) gebildet ist, in welches der Haken (11) des gegenüberliegenden Schenkels (8) eingreift.

### Claims

1. A bearing arrangement for a sun visor body, particularly for a vehicle visor, the bearing arrangement comprising a shallow bearing housing (1) and a bearing shaft (2) having a flattened section (7) engaged by a U-shaped clamping spring (3) the shape (9) of the free ends of which is such as to permit the ends to be hooked one on to the other, in which this hooking shape results from an extension of each of the spring's legs (8, 8'), in which the one extension is twice angularly bent towards the bearing housing (1) so as to form an actual hook (11) while the other extension (8'), which is also angularly bent towards the bearing housing (1), has a ridge (12) which in the operational positions of the two extensions grips the inwardly bent hook (11) at its back, characterized in that the ridge (12) is located in the plane containing the other extension's angularly bent portion (13) substantially in the region of the apex of the angle through which the latter has been bent, and in that the bent portion (13) terminates at a distance from the opposite leg (8) and slopes below a slewing arc « S » of the oppositely disposed hook (11) to an extent sufficient to serve as a ramp for the hook for starting the back-gripping operation.

2. A bearing arrangement according to claim 1, characterized in that the hook ridge (12) is formed by a window (14) provided in the leg extension (13), and in that the hook (11) of the opposite leg (8) engages the window.

### Revendications

1. Palier pour corps de pare-soleil, notamment pour pare-soleil de véhicules automobiles, comportant un corps (1) plat et un axe (2) comportant un aplatissement (7) sur lequel agit un ressort de coincement (3) en U, les extrémités libres du ressort (3) comportant une formation d'accrochage (9) constituée par des prolongements des branches (8, 8'), dont le premier prolongement est réalisé sous la forme d'un crochet (11) coudé deux fois vers le corps (1) du palier, tandis que le second prolongement (8'), également coudé vers le corps (1), comporte au-dessous du corps (1) un bord (12) qui s'accroche au crochet (11) coudé vers l'intérieur en position d'utilisation, caractérisé en ce que le bord (12) est placé dans le plan de coude (13) du second prolongement, à peu près dans la zone de son arête de pliage, le coude (13) s'achevant à une certaine distance avant la branche (8) opposée et étant inclinée jusqu'au-dessous de l'arc de pivotement en « S » du crochet (11) opposé, dans une mesure telle que le coude (13) lui sert de pente de montée pour déclencher l'accrochage.

2. Palier selon la revendication 1, caractérisé en ce que le bord d'accrochage (12) est formé par une échancrure (14) pratiquée dans le prolongement de branche (13), dans laquelle pénètre le crochet (11) de la broche (8) opposée.

# FIG.1

# FIG. 2

# FIG.5

# FIG.3

# FIG. 4